# EUROPÄISCHE PATENTANMELDUNG

(11) **EP 3 095 928 A1**
(43) Veröffentlichungstag der Anmeldung: **23.11.2016**
(21) Anmeldenummer: 15405036.3
(22) Anmeldetag: 22.05.2015
(51) Int. Cl.: E04F 21/18, F16B 15/02, F16B 15/06, E04F 13/08

(54) **MONTAGEHILFE UND VERFAHREN DAFÜR**

(71) Anmelder: Rogger Fasteners AG, 3257 Grossaffoltern (CH)
(72) Erfinder: Rogger, Adrian, CH-3250 Lyss (CH); Rogger, Marcel, CH-3257 Grossaffoltern (CH)
(74) Vertreter: Kessler, Stephan

(57) **Zusammenfassung**

Die Erfindung betrifft ein System, welches einen Längsträger (500.1) mit einer Hauptfläche und ein stiftartiges Befestigungsmittel (600) zur provisorischen Befestigung des Längsträgers (500.1) an einer Aussenseite einer Isolationsschicht (2) umfasst. Das stiftartige Befestigungsmittel (600) umfasst einen Kopfteil (601) zur Befestigung des stiftartigen Befestigungsmittels (600) am Längsträger (500.1) und einen Stiftteil (602) zum Einführen in eine Isolationsschicht (2).

## Beschreibung

Die Erfindung betrifft ein System, welches einen Längsträger mit einer Hauptfläche und ein stiftartiges Befestigungsmittel zur provisorischen Befestigung des Längsträgers an einer Aussenseite einer Isolationsschicht umfasst. Die Erfindung betrifft weiter einen Nagel zur provisorischen Befestigung eines Längsträgers an einer Aussenseite einer Isolationsschicht umfassend einen Stiftteil und einen Kopfteil.

Bei der Gebäudekonstruktion wird nach dem Erstellen einer Gebäudewand häufig aussen eine Isolationsschicht aufgebracht. Um beispielsweise eine Fassade an der Aussenseite der Isolationsschicht montieren zu können, sind Träger an der Aussenseite der Isolationsschicht nötig. Dabei müssen diese Träger an der dahinterliegenden Gebäudewand befestigt werden.

Die Firma Rogger Fasteners AG stellt Winkelprofile her die aussen an der Isolationsschicht angebracht werden und an denen Fassadenelemente befestigt werden können. Zur provisorischen Fixierung des Winkelprofils an der Isolationsschicht wird ein Schenkel des Winkelprofils zwischen zwei Dämmstoffplatten oder in einen Schlitz in der Isolationsschicht eingeschoben. Anschliessend kann ein Loch durch die Isolation in die dahinterliegende Gebäudewand gebohrt werden, um das Winkelprofil definitiv zu befestigen.

Dieses Verfahren hat den Nachteil, dass das Winkelprofil nur an vordefinierten Stellen, das heisst zwischen den Dämmstoffplatten oder in einem Schlitz montierbar ist. Wird ein Schlitz verwendet, muss dieser zuerst mit geeignetem Werkzeug in die Isolationsschicht eingearbeitet werden, was Zeit braucht und zusätzliche Kosten verursacht. Zudem können die Winkelprofile in vertikalen Schlitzen nur erschwert angebracht werden, da in sehr weichem Material wie Watte die Winkelprofile kaum provisorisch gehalten werden können.

In der DE 20 2014 101 857 U1 (A. Braun) sind Befestigungsteile zum Anbringen von Profilen an der Aussenseite einer Dämmstoffschicht gezeigt. Der beschriebene Satz von Bauteilen umfasst ein Winkelprofil und Nägel aus Kunststoff. Das Winkelprofil hat zwei Schenkel, wobei ein Schenkel auf der Aussenfläche der Wärmedämmung aufliegt und der zweite Schenkel in einen Spalt zwischen der Wärmedämmung und einer Perimeterdämmung eingeschoben wird. Zur Vorbefestigung des Winkelprofils dienen die Nägel. Die abschliessende Befestigung des Winkelprofils erfolgt durch Spachtelmasse oder Putz. Der Nagel aus Kunststoff hat einen flachen Kopf mit vergrössertem Durchmesser und am anderen Ende eine Spitze. Bei der Montage wird der Nagel durch eine Öffnung im Winkelprofil geführt und von der Aussenfläche her in die Wärmedämmung hinein eingedrückt. Das Eindrücken ist mit einem Finger oder Daumen möglich.

Auch diese Befestigungsart hat den Nachteil, dass das Winkelprofil nur zwischen zwei Dämmstoffplatten bzw. am Ende der Dämmstoffschicht und damit an einer vordefinierten Position montierbar ist. Die Kunststoffnägel zur provisorischen Befestigung können erst montiert werden, wenn das Profil an die Dämmstoffschicht gehalten wird. Für die Montage werden daher mindestens zwei Personen benötigt.

### Darstellung der Erfindung

Aufgabe der Erfindung ist es, eine dem eingangs genannten technischen Gebiet zugehörendes System zu schaffen, welches ein einfaches Vormontieren eines Trägers an einer beliebigen Stelle an der Aussenseite einer Isolationsschicht ermöglicht.

Die Lösung der Aufgabe ist durch die Merkmale des Anspruchs 1 definiert. Gemäss der Erfindung umfasst das stiftartige Befestigungsmittel einen Kopfteil zur Befestigung des stiftartigen Befestigungsmittels an einem Längsträger und einen Stiftteil zum Einführen in eine Isolationsschicht.

Stiftartig bedeutet dabei, dass das Befestigungsmittel eine längliche Form hat, wobei vorzugsweise die Länge ein Vielfaches der Breite des Befestigungsmittels beträgt. Der Längsträger dient vorzugsweise dazu Fassadenelemente oder sonstige Anbauteile mit der Gebäudewand zu verbinden. Dabei werden die Fassadenelemente bzw. die Anbauteile am Längsträger befestigt, und der Längsträger ist bevorzugt in einem Abstand zur Gebäudewand angebracht. In diesem Abstand zwischen Gebäudewand und Längsträger befindet sich die Isolationsschicht.

Unter Längsträger ist beispielsweise ein Stab, eine Schiene, ein Rohr oder ein Profil zu verstehen. Die Hauptfläche des Längsträgers ist die Seite, die im befestigten Zustand des Längsträgers der Isolationsschicht zugewandt ist oder anders ausgedrückt ist es die Seite, mit der der Längsträger auf der Isolation aufliegt.

Im montierten Zustand befindet sich das Stiftteil des stiftartigen Befestigungsmittels vorzugsweise vollständig oder nahezu vollständig in der Isolationsschicht, während das Kopfteil am Längsträger befestigt ist. Damit verbindet das stiftartige Befestigungsmittel den Längsträger mit der Isolationsschicht.

Da das Stiftteil des stiftartigen Befestigungsmittels in die Isolationsschicht einführbar ist, kann der Längsträger an einer beliebigen Stelle in die Isolationsschicht eingesteckt werden. Mit seinem Kopfteil kann das stiftartige Befestigungsmittel bereits vor der Montage mit dem Längsträger verbunden werden. Sind mindestens zwei stiftartige Befestigungsmittel am Längsträger befestigt, kann der Längsträger an einer beliebigen Stelle in einer vertikalen oder in einer horizontalen Lage oder in einer beliebigen Winkelstellung zur Horizontalen in die Isolationsschicht eingesteckt werden. Somit wird der Längsträger durch das stiftartige Befestigungsmittel an der Außenseite der Isolationsschicht in beliebiger Lage provisorisch gehalten. Das stiftartige Befestigungsmittel ermöglicht, dass der Längsträger ohne vorgängige Bearbeitung der Isolationsschicht von nur einer Person und ohne zusätzliches Werkzeug vormontiert werden kann. Da kein Schlitz in die Isolation eingeschnitten werden muss, wird die Isolationsschicht auch nicht beschädigt. Die Befestigung des Längsträgers mit den stiftartigen Befestigungsmittel beeinträchtigt daher die Isolationswirkung kaum.

Stellt sich bei der weiteren Montage heraus, dass der Längsträger verschoben werden muss, kann er mit sehr geringem Aufwand herausgezogen und an einer anderen Stelle in die Isolationsschicht wieder eingesteckt werden. Mit dem so platzierten Längsträger können anschliessend durch die Isolationsschicht Löcher in die Gebäudewand gebohrt werden, um den Längsträger zum Beispiel mit Schrauben und Distanzhaltern endgültig an der Gebäudewand zu befestigen. Alle Arbeitsschritte sind von einer einzelnen Person ausführbar, da durch das stiftartige Befestigungsmittel der Längsträger während einem Bohrvorgang und einer Montage von Distanzstücken in Position gehalten wird. Zudem stabilisiert das stiftartige Befestigungsmittel den Längsträger beim Bohrvorgang zusätzlich. Die stiftartigen Befestigungsmittel können nach der definitiven Befestigung des Längsträgers in der Isolation verbleiben, da sie kostengünstig herstellbar sind. Das erlaubt eine zeitsparende und kostengünstige Montage der Längsträger bzw. der Fassadenelemente oder der Anbauteile an der Aussenseite der Isolationsschicht.

Bei bekannten provisorischen Befestigungen des Längsträgers in einem Schlitz kann der Längsträger in Längsrichtung verrutschen. Mit dem stiftartigen Befestigungsmittel ist sichergestellt, dass der Längsträger genau in der positionierten Lage gehalten wird. Das erhöht die Sicherheit und ermöglicht eine exakte Fixierung der Längsträger, was wiederum eine speditive Montage der Fassadenelemente oder Anbauteile erlaubt.

Zudem kann der Längsträger mit dem stiftartigen Befestigungsmittel in unterschiedlichen Isolationsmaterialen gehalten werden. Das heisst, eine provisorische Fixierung des Längsträgers ist auch an Isolationsmaterial mit geringer Dichte, wie beispielsweise Watte, möglich.

Da die Befestigung des Längsträgers in der Isolationsschicht durch das separate stiftartige Befestigungsmittel erfolgt, benötigt der Längsträger keinen abstehenden Schenkel zur Befestigung in der Isolationsschicht. Dadurch hat der Längsträger einen kompakten Querschnitt. Das hat den Vorteil, dass mehrere Längsträger platzsparend gelagert werden können oder dass sie gut und kompakt stapelbar sind. Zudem sind die Längsträger kostengünstig produzierbar, da der einfachere Querschnitt weniger Arbeitsschritte bedingt.

Eine weitere Aufgabe der Erfindung ist es, ein dem eingangs genannten technischen Gebiet zugehörendes Verfahren zur Montage eines Längsträgers zu schaffen, welches eine einfache Vormontage des Längsträgers ermöglicht.

Die Lösung der Aufgabe ist durch die Merkmale des Anspruchs 15 definiert. Bei der Erfindung handelt es sich um ein Verfahren zur Vormontage eines Längsträgers an einer Fläche, insbesondere an einer Aussenseite einer Isolationsschicht unter Verwendung eines stiftartige Befestigungsmittels mit einem Kopfteil zur Befestigung des stiftartigen Befestigungsmittels am Längsträger und eines Stiftteils zum Einführen in eine Isolationsschicht, wobei der Kopfteil des stiftartigen Befestigungsmittels am Längsträger befestigt wird und der Stiftteil in die Fläche eingesteckt wird.

Die stiftartigen Befestigungsmittel können auf der Baustelle, kurz vor der Montage des Längsträgers montiert oder umplatziert werden. Durch diese Flexibilität wird eine einfache und effiziente Vormontage der Längsträger ermöglicht.

Vorzugsweise ist das stiftartige Befestigungsmittel in der Art eines Nagels ausgebildet und kann von Hand in die Isolation gesteckt werden.

Nachfolgend wird der Begriff Nagel für das Befestigungsmittel in der Art eines Nagels verwendet. Die Bezeichnung "in der Art eines Nagels" beschränkt sich nicht auf Nägel im herkömmlichen Sinn. Unter dieser Bezeichnung sind alle nagelartigen Elemente zu verstehen, die eine längliche Form haben und von Hand gehandhabt werden können wie beispielsweise einen Stift, einen Keil oder einen Stab.

Die Montierbarkeit von Hand bietet den Vorteil, dass kein zusätzliches Werkzeug zur Vormontage der Längsträger nötig ist. Dadurch wird der Montageaufwand reduziert und der Längsträger kann einfach, kostengünstig und zeitsparend an der Isolationsschicht angebracht werden.

In der Art eines Nagels bedeutet nicht, dass der Querschnitt des Nagels im Stiftteil rund sein muss. Dabei ist unter Querschnitt des Nagels der rechtwinklig zur Längsachse des Nagels liegende Schnitt zu verstehen.

Vorzugsweise hat der Nagel im Stiftteil einen kreuzförmigen Querschnitt. In Alternativen kann der Nagel auch eine runde, eine viereckige oder eine beliebige Querschnittsform aufweisen. Mit Vorteil ist ein Ende des Nagels zu einer Spitze zulaufend. Dadurch wird das Einstecken des Nagels in die Isolationsschicht von Hand erleichtert. Bevorzugt weist der Nagel scharfe Kanten auf, die in die Isolationsschicht einschneiden und damit ebenfalls das Einstecken erleichtern.

Alternativ kann das stiftartige Befestigungsmittel auch derart ausgebildet sein, dass es mit einem Werkzeug, insbesondere mit einem Hammer oder dergleichen, in die Isolationsschicht eingetrieben werden kann. Dies würde aber bedingen, dass das Kopfteil des Nagels solider ausgebildet und damit teurer in der Herstellung ist.

Bevorzugt weist der Nagel einen Kopfteil auf, der lösbar am Längsträger befestigbar ist. Der Kopfteil befindet sich mit Vorteil an einem Ende des Nagels, welches dem zu einem Spitz zulaufenden Ende gegenüber liegt.

Die lösbare Verbindung hat den Vorteil, dass der Nagel während der Montage bei Bedarf versetzt werden kann. Wenn in bestimmten Bereichen der Isolationsschicht kein Nagel eingesteckt werden kann, beispielsweise bei Aussparungen oder bei Übergängen in der Isolationsschicht, kann durch die lösbare Verbindung der Nagel problemlos umplatziert werden. Das vereinfacht die Montage und erlaubt während dem Montieren eine flexible Anpassung an die Umgebung. Zudem bietet die lösbare Verbindung den Vorteil, dass die Nägel erst kurz vor der Montage mit dem Längsträger verbunden werden können. Dadurch lassen sich Längsträger und Nägel getrennt handhaben. Das ermöglicht eine platzsparende Lagerung und vereinfacht den Transport zur Baustelle.

Vorzugsweise steht der Kopfteil rechtwinklig zur Stiftteillängsachse und hat eine prismatische Form. Bevorzugt ist der Kopfteil im rechtwinklig zur Stiftteillängsachse stehenden Querschnitt rechteckförmig ausgebildet.

Alternativ kann der Kopfteil so ausgebildet sein, dass er nur einmalig mit dem Längsträger verbindbar respektive nicht lösbar mit dem Längsträger verbindbar ist.

In einer bevorzugten Ausführung ist der Nagel im befestigten Zustand rechtwinklig von der Hauptfläche des Längsträgers abstehend.

Dadurch kann der Nagel einfach montiert werden, da der Längsträger von aussen mit vormontierten Nägeln geradlinig in die Isolationsschicht eingesteckt werden kann. Ferner erlauben die rechtwinklig abstehenden Nägel eine stabile Befestigung des Längsträgers an der Isolationsschicht. Damit ist der Längsträger in alle Richtungen parallel zur Gebäudewand gleich stabil gehalten.

Alternativ dazu kann der Nagel auch in einem beliebigen Winkel zur Hauptfläche des Längsträgers abstehend sein. Das ist dann vorteilhaft, wenn der Längsträger in einer Richtung besonders stark belastet wird.

Bevorzugt ist der Kopfteil über eine Rastverbindung am Längsträger befestigbar. Der Kopfteil weist somit mindestens ein rastendes Element auf und der Längsträger weist mindestens ein entsprechendes Gegenelement auf, damit eine Rastverbindung ermöglicht wird.

Durch die Rastverbindung wird ein einfaches und rasches Verbinden von Kopfteil und Längsträger ermöglicht. Das Einrasten der Rastverbindung wird akustisch wie auch haptisch wahrgenommen. Somit ist für den Monteur beim Zusammenfügen von Köpfteil und Längsträger eindeutig, wann der Kopfteil im Längsträger eingerastet ist und die Verbindung hält. Durch diese Rückmeldung kann sichergestellt werden, dass Kopfteil und Längsträger sicher miteinander verbunden sind.

Bevorzugt wird der Kopfteil von der Seite der Hauptfläche her an den Längsträger geführt und mit dem Längsträger verbunden. In einer alternativen Ausführung kann der Kopfteil aber auch von der Seite, die im befestigten Zustand des Längsträgers nach aussen von der Isolation weg weist, zugeführt werden. In diesem Fall weist der Längsträger eine Öffnung auf, durch welche der Nagel mit dem Stiftteil voran durchgeführt wird. Der Längsträger weist weiter im Bereich der Öffnung Befestigungsmittel auf, mittels welchen der Kopfteil am Längsträger befestigt werden kann. Die Befestigungsmittel können dabei ebenfalls eine Rastverbindung ermöglichen. Im Unterschied zur bevorzugten Ausführungsform liegt damit in montiertem Zustand der Kopfteil des Nagels auf der der Hauptfläche gegenüberliegenden Seite des Längsträgers. Diese Ausführungsform hat den Vorteil, dass auch nach der Vormontage nachträglich noch zusätzliche Nägel eingeführt werden können. Dies kann zum Beispiel dann von Vorteil sein, wenn sich nach der Vormontage herausstellt, dass der Längsträger nicht hinreichend befestigt ist.

Bei beiden Varianten befindet sich im montierten Zustand der Stiftteil des Befestigungsmittels auf der Seite der Hauptfläche.

Alternativ dazu kann die Verbindung zwischen Kopfteil und Längsträger auch über einen Formschluss oder Kraftschluss ohne Rastverbindung erfolgen.

Vorzugsweise weist der Kopfteil an einer dem Stiftteil gegenüberliegenden Seite Rasthaken auf und der Längsträger weist bevorzugt Nuten auf, so dass in befestigtem Zustand des Nagels am Längsträger die Rasthaken in die Nuten eingreifen.

In Varianten kann auch der Kopfteil Nuten und der Längsträger die Rasthaken umfassen.

Beide Varianten bieten den Vorteil einer formschlüssigen und damit sicheren Verbindung zwischen Kopfteil und Längsträger. Mit Vorteil weist der Kopfteil mindestens einen Rasthaken und der Längsträger mindestens eine Nut auf. In einer bevorzugten Ausführung hat der Kopfteil zwei Rasthaken und der Längsträger zwei Nuten.

Vorzugsweise ist der Rasthaken nasenförmig ausgebildet. Dadurch kann der Rasthaken über die schräge Fläche der Nasenform einfach positioniert werden und über die Nut geführt werden.

Vorzugsweise sind die Rasthaken im Randbereich des Kopfteils angeordnet. Damit wird bei einem Einsatz von zwei Rasthaken ein Abstand zwischen letzteren erreicht.

Durch den Abstand zwischen den Rasthaken ist der Nagel im befestigten Zustand stabil im Längsträger abgestützt. Dadurch kann der Nagel im befestigten Zustand seitliche Kräfte, beispielsweise Belastungen, die rechtwinklig zur Längsachse des Stiftteils auftreten, aufnehmen. Der Abstand zwischen den Rasthaken definiert die Breite des Kopfteils. Die Breite entspricht dem Mass des Kopfteils in Querrichtung des Längsträgers. Die Breite des Kopfteils beträgt vorzugsweise rund das 1.5 fache der Länge des Kopfteils. In Varianten können auch andere Verhältnisse zwischen Länge zu Breite vorliegen.

Bevorzugt umfassen die Rasthaken zwei Schenkel, womit der Kopfteil im Querschnitt eine U-Form bildet.

Mit Vorteil zeigt die Öffnungsrichtung der U-Form in die entgegengesetzte Richtung der Nagelspitze und der untere Abschnitt der U-Form ist mit dem Stiftteil des Nagels verbunden.

Vorzugsweise befinden sich die Rasthaken am Ende der Schenkel. Das heisst, die Rasthaken sind an beiden Schenkelenden im Bereich der Öffnung der U-Form angebracht. Vorzugsweise sind am Längsträger die Nuten in einem Abstand zueinander angeordnet. Zum Verbinden des Nagels mit dem Längsträger wird der Kopfteil des Nagels mit der Öffnung der U-Form voran zwischen die Nuten geführt, so dass beide Rasthaken in die beiden Nuten eingreifen.

Die Rasthaken können sich auch innerhalb der U-Form gegenüberliegen.

Alternativ dazu können die Rasthaken auch ohne Schenkel, beispielsweise an einem Drehverschluss, angebracht sein. Das Kopfteil des Nagels hat in diesem Fall keine U-Form, sondern ist oval ausgestaltet und wird in die Nuten eingedreht. Die Rasthaken können dann durch eine Drehrastung einrasten.

Vorzugsweise sind die beiden Schenkel quer zu einer Stiftteillängsrichtung federnd ausgebildet.

Federnd bedeutet, dass sich die Schenkel relativ zum übrigen Kopfteil und zum Stiftteil des Nagels bewegen können. Werden die Schenkel nicht mit einer Kraft beaufschlagt, befinden sie sich vorzugsweise in einer Grundposition. In dieser Grundposition können die Schenkel zwischen die Nuten des Längsträgers geführt werden. Durch die nasenförmigen Rasthaken werden die Schenkel vorzugsweise zuerst gegeneinander zusammengedrückt. Befinden sich die Rasthaken über den Nuten bewegen sich die Schenkel durch die Federkraft zurück in die Grundposition und rasten mit den Rasthaken in die Nuten ein. Somit stellt die federnde Eigenschaft sicher, dass die Schenkel einrasten, wenn die Rasthaken des Kopfteils zu den Nuten des Längsträgers geführt werden.

In einer bevorzugten Ausführung sind die Schenkel nicht vollständig in der Grundstellung, sondern sind etwas vorgespannt, wenn die Rasthaken eingerastet sind. Das heisst, die Rasthaken werden im befestigten Zustand Richtung Nutgrund gedrückt. Das bietet den Vorteil, dass sichergestellt ist, dass die Rasthaken auch wirklich eingerastet sind und somit der Kopfteil mit dem Längsträger verbunden ist. Durch diese Vorspannung ist der Kopfteil spielfrei mit dem Längsträger verbunden und er kann sich durch allfällige Vibrationen auch nicht bewegen oder ungewollt lösen. Damit kann zudem, wenn auch in geringem Masse, ein Kraftschluss erreicht werden, womit verhindert werden kann, dass der Nagel entlang der Nutschiene des Längsträgers bereits bei geringer Krafteinwirkung verschoben werden kann. Alternativ könnte der Kopfteil zur Fixierung in Nutschienenlängsrichtung auch einen Stift aufweisen, welcher in eine Stiftöffnung des Längsträgers eingreift.

Vorzugsweise entsteht die federnde Eigenschaft der Schenkel durch die Elastizität des Materials. Alternativ dazu können auch zusätzliche Federelemente aus Metall vorgesehen werden, um den Schenkeln eine federnde Eigenschaft zu verleihen.

Die Rasthaken des Kopfteils sind vorzugsweise federnd ausgebildet. Anstelle der Rasthaken können auch die Schenkel, welche die Rasthaken umfassen federnd ausgebildet sein. In weiteren Varianten kann der Kopfteil des Nagels auch starr ausgebildet sein. In diesem Fall können die Nutschienen die für den Rasteffekt notwendige Elastizität aufweisen.

Ein Nagel zur provisorischen Befestigung eines Längsträgers an einer Aussenseite einer Isolationsschicht umfasst einen Stiftteil und einen Kopfteil, wobei der längliche leistenförmige Kopfteil Rasthaken zur Befestigung des Nagels an einem Längsträger umfasst.

Leistenförmig bedeutet, dass die Rasthaken als längliche Ausdehnung in Längsrichtung des Kopfteils ausgebildet sind. Das hat den Vorteil, dass der Nagel im befestigten Zustand durch die längliche Ausdehnung der Rasthaken stabil mit dem Längsträger verbunden ist.

In einer bevorzugten Ausführungsform weist der Nagel mindestens eine in eine Längsrichtung des Stiftteils verlaufende Schneidkanten auf.

Die Schneidkante bietet den Vorteil, dass das Einstecken des Stiftteils in die Isolationsschicht erleichtert wird, da die Schneidkanten beim Einstecken das Isolationsmaterial durchsticht. Der Nagel kann durch die Schneidkanten mit der Hand und ohne grossen Kraftaufwand in die Isolation eingesteckt werden.

Vorzugsweise hat der Stiftteil vier über den Umfang angeordnete Schneidkanten, die in Umfangrichtung jeweils in einem Winkel von 90° zueinander stehen. Der Stiftteil kann aber auch eine andere Anzahl Schneidkanten, beispielsweise zwei gegenüberliegende Schneidkanten, aufweisen.

Alternativ dazu kann der Stiftteil auch ohne Schneidkanten ausgebildet sein. Bevorzugt hat der Stiftteil ohne Schneidkanten eine konische Gestalt, um das Einbringen des Nagels in die Isolationsschicht zu erleichtern. In weiteren Varianten kann der Stiftteil auch Widerhaken oder dergleichen aufweisen, um einen besseren Halt in der Isolationsschicht zu ermöglichen.

Vorzugsweise ist der Nagel aus Kunststoff ausgebildet. Dadurch ist der Nagel mit Spritzguss in grossen Stückzahlen kostengünstig herstellbar. Zudem ist ein Nagel aus Kunststoff leicht, was die Handhabung und Montage erleichtert. Wegen der im Vergleich zu Metall tiefen Wärmeleitfähigkeit von Kunststoff beeinträchtigen Nägel aus Kunststoff zudem die Isolationswirkung kaum.

Alternativ dazu kann der Nagel auch aus Metall oder Holz gefertigt sein um beispielsweise höheren Festigkeits- oder Steifigkeitsanforderungen zu genügen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Schnittdarstellung einer Seitenansicht eines Nagels im befestigten Zustand in einer Isolationsschicht, wobei der Nagel mit einem Längsträger verbunden ist;
- Fig. 2a: eine schematische Darstellung einer Seitenansicht des Nagels;
- Fig. 2b: eine schematische Darstellung einer Frontansicht des Nagels;
- Fig. 3a: eine schematische Darstellung eines Nagels, der mit einem Längsträger verbunden ist in einer Seitenansicht;
- Fig. 3b: eine schematische Querschnittsdarstellung des Längsträgers zu einer Längsträgerlängsrichtung mit einem befestigen Nagel;
- Fig. 3c: eine vergrösserte schematische Detailansicht des mittleren Bereichs des Längsträgers aus Figur 3b;
- Fig. 3d: eine schematische Draufsicht des Nagels und des Längsträgers aus Figur 3a und Figur 3b;
- Fig. 4a: eine schematische Querschnittsdarstellung des Längsträgers aus Figur 3b mit einer montierten Bohrlehre;
- Fig. 4b: eine schematische Draufsicht des Längsträgers mit Bohrlehre aus Figur 4a;
- Fig. 5a: eine schematische Querschnittsdarstellung zur Längsträgerlängsrichtung einer weiteren Ausführungsvariante eines Längsträgers;
- Fig. 5b: eine schematische Darstellung einer Draufsicht des Längsträgers aus Figur 5a;
- Fig. 6a: eine schematische Querschnittsdarstellung zur Längsträgerlängsrichtung einer weiteren Ausführungsvariante eines Längsträgers;
- Fig. 6b: eine schematische Darstellung einer Draufsicht des Längsträgers aus Figur 6a;
- Fig. 7a: eine schematische Querschnittsdarstellung zur Längsträgerlängsrichtung einer weiteren Ausführungsvariante eines Längsträgers;
- Fig. 7b: eine schematische Darstellung einer Draufsicht des Längsträgers aus Figur 7a;
- Fig. 8a: eine schematische Querschnittsdarstellung zur Längsträgerlängsrichtung einer weiteren Ausführungsvariante eines Längsträgers;
- Fig. 8b: eine schematische Darstellung einer Draufsicht des Längsträgers aus Figur 8a;
- Fig. 9: eine schematische Darstellung einer Draufsicht einer weiteren Ausführungsvariante eines Längsträgers.

Grundsätzlich sind in den Figuren gleiche Teile mit gleichen Bezugszeichen versehen.

### Wege zur Ausführung der Erfindung

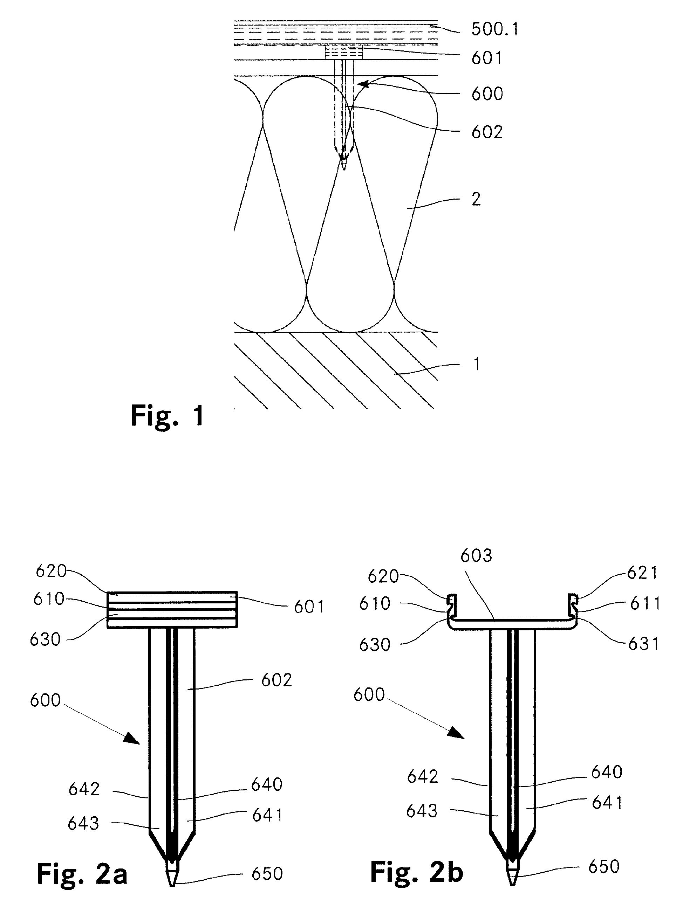

Figur 1 zeigt eine Ausführungsform eines erfindungsgemässen Nagels 600 im befestigten Zustand. Der Nagel 600 wird benötigt um einen Längsträger 500.1 an der Aussenseite einer Isolationsschicht 2 zu befestigen. Die Isolationsschicht 2 befindet sich wiederum an der Aussenseite einer Gebäudewand 1. Der Nagel 600 besteht aus Kunststoff und umfässt einen Kopfteil 601 und einen Stiftteil 602. Mit dem Kopfteil 601 ist der Nagel 600 mit dem Längsträger 500.1 verbunden. Der Stiftteil 602 des Nagels 600 steckt in der Isolationsschicht 2.

Der Längsträger 500.1 dient dazu Fassadenelemente oder sonstige Anbauteile an der Aussenseite der Isolationsschicht 2 zu befestigen. In einem ersten Schritt werden die Nägel 600 mit dem Längsträger 500.1 verbunden. Anschliessend kann der Längsträger von einer einzelnen Person an einem beliebigen Ort in der Isolationsschicht 2 eingesteckt werden. Diese einfache provisorische Vormontage des Längsträgers 500.1 vereinfacht die Montage, da die Isolationsschicht 2 nicht vorgängig bearbeitet werden muss. Ausserdem sind nicht mehrere Personen notwendig, um den Längsträger zu befestigen. Auch ist die Isolationswirkung durch die tiefe Wärmeleitfähigkeit der Nägel 600 aus Kunststoff kaum beeinträchtigt. Nach der provisorischen Fixierung des Längsträgers 500.1 erfolgt in einem weiteren Schritt eine Bohrung durch die Isolationsschicht 2 in die Gebäudewand 1. Der Längsträger 500.1 wird anschliessend definitiv mit Schrauben an der Gebäudewand 1 befestigt. Die Nägel 600 können in der Isolationsschicht 2 verbleiben. Während dem Bohren stabilisieren die Nägel 600 den Längsträger 500.1.

Figur 2a zeigt eine schematische Seitenansicht eines Nagels 600 mit dem Kopfteil 601 und dem Stiftteil 602. Der Stiftteil 602 des Nagels 600 umfasst vier Schneidkanten 640 bis 643, die in Längsrichtung des Stiftteils 602 verlaufen und einen kreuzförmigen Querschnitt des Stiftteils 602 bilden. An einem Ende des Stiftteils 602 befindet sich eine Kopfplatte 603, dargestellt in Figur 2b. Das andere Ende des Stiftteils 602 ist als Spitze 650 ausgestaltet. Die Schneidkanten 640 - 643 verlaufen vom Kopfteil 601 bis zur Spitze 650 hin, wobei die Schneidkanten 640 - 643 im Bereich der Spitze 650 gegen die Spitze 650 hin zulaufen. In Varianten kann der Stiftteil als Ganzes mit den Schneidkanten 640 - 643 konisch zur Spitze hin zusammenlaufen.

Der Kopfteil 601 steht rechtwinklig zur Stiftteillängsrichtung und hat eine prismatische Form. Der Kopfteil 601 ist leistenförmig ausgebildet und umfasst die rechtwinklig zur Stiftteillängsrichtung stehende Kopfplatte 603. Die Kopfplatte 603 ist rechteckförmig, wobei die Seite der Kopfplatte 603 in Querrichtung etwa eineinhalbmal so lang ist wie die Seite der Kopfplatte 603 in Längsrichtung. Die Längsrichtung der Kopfplatte 603 entspricht dabei der Längsrichtung des Längsträgers 500.1. Entsprechend ist die Querrichtung der Kopfplatte 603 die Querrichtung des Längsträgers 500.1.

Figur 2b zeigt eine Frontansicht des Nagels 600. In Querrichtung stehen auf beiden Seiten der Kopfplatte 603 Schenkel 610, 611 rechtwinklig von der Kopfplatte 603 ab. Die Kopfplatte 603 und die beiden Schenkel 610, 611 bilden somit in Querrichtung gesehen eine U-förmige Gestalt, wobei die Öffnung der U-Förm vom Stiftteil 602 des Nagels 600 weg zeigt. Auf einer äusseren, von einem Zentrum des Nagels 600 wegweisenden Seite der Schenkel befinden sich Rasthaken 620, 621. Die äusserste Kante der Schenkel 610, 611 hat eine Anpassung, damit bei der Montage die Rasthaken 620, 621 einfacher in die Nuten im Längsträger 500.1 eingreifen können. Beim Übergang der Schenkel 610, 611 zur Kopfplatte 603 ist die Dicke der Schenkel 610, 611 in einem kleinen Bereich 630, 631 sehr dünn ausgebildet. In diesem dünnen Bereichen 630, 631 können sich die Schenkel 610, 611 verformen.

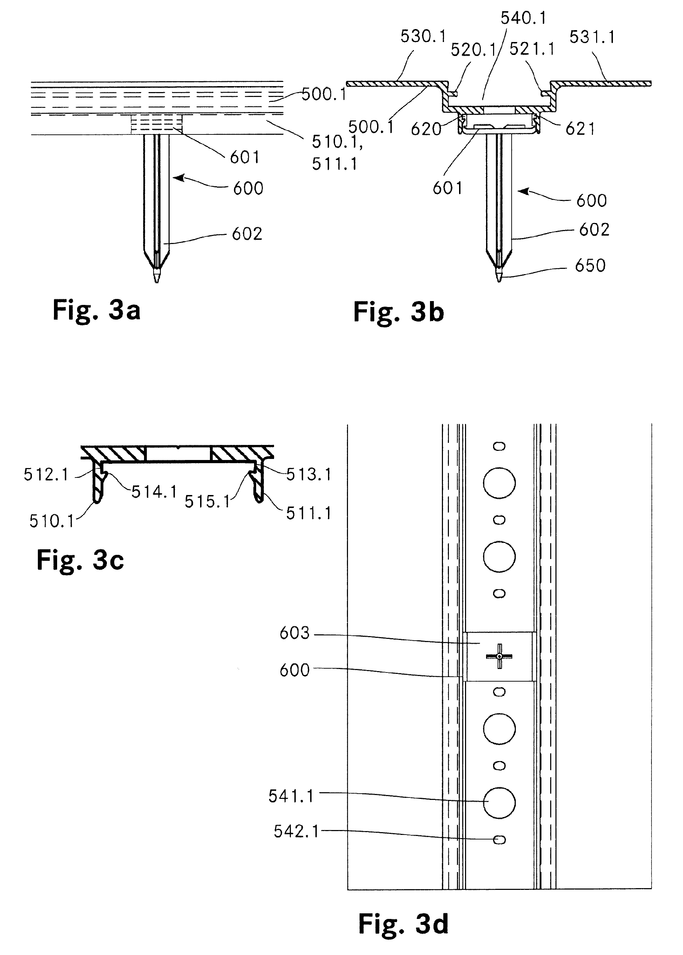

Damit wird erreicht, dass die Schenkel 610, 611 relativ zur Kopfplatte 603 in Querrichtung bewegbar sind. Das heisst, die Schenkel 610, 611 können nach aussen oder gegen innen, also gegeneinander zu geschwenkt werden. Wenn die Schenkel 610, 611 nicht ausgelenkt sind, befinden sie sich in einer aufrechten Grundposition. Durch die Elastizität des Kunststoffs federn die Schenkel 610, 611 nach dem Auslenken gegen aussen oder gegen innen immer wieder in diese Grundposition zurück. Diese federnde Eigenschaft der Schenkel 610, 611 ermöglicht ein sicheres Einrasten der Rasthaken 620, 621 in die Nuten des Längsträgers 500.1. Der Vorgang des Einrastens in die Nuten wird nachfolgend bei Figur 3a bis 3d beschrieben.

Figur 3a zeigt eine Seitenansicht des Nagel 600 und des Längsträgers 500.1, wobei der Nagel 600 mit dem Kopfteil 601 auf der Seite der Hauptfläche mit dem Längsträger 500.1 verbunden ist und der Stiftteil 602 in einem rechten Winkel vom Längsträger 500.1 absteht. Die Hauptfläche des Längsträgers 500.1 ist die Seite, die im befestigten Zustand des Längsträgers der Isolationsschicht zugewandt ist oder anders ausgedrückt ist es die Seite, mit der der Längsträger 500.1 auf der Isolation aufliegt. Figur 3b zeigt einen Querschnitt des Längsträgers 500.1 mit einem befestigten Nagel 600. Der Längsträger 500.1 weist im Querschnitt eine U-förmige Gestalt mit einer Öffnung 540.1 auf mit beidseitig an die U-Form anschliessenden Ausdehnungen 530.1, 531.1 in Querrichtung, dargestellt in Figur 3b. Die Höhe der U-Form im Querschnitt entspricht etwa einem Drittel der Breite der U-Form. Die Ausdehnungen 530.1, 531.1 sind an einem oberen Enden und auf einer Aussenseite der Schenkel der U-Form angeordnet und stehen rechtwinklig von den Schenkeln der U-Form ab. Die Länge der Ausdehnungen 530.1, 531.1 in Querrichtung des Längsträgers entspricht etwa der Breite der U-Form. Im montierten Zustand weist die Öffnung 540.1 der U-Form gegen aussen, von der Isolationsschicht weg. An den Seitenwänden der U-Form befinden sich zwei jeweils zur anderen Seitenwand zeigende Stege 520.1, 521.1. Die Stege 520.1, 521.1 befinden sich auf einer Innenseite der Schenkel der U-Form und stehen dabei rechtwinklig von den Schenkeln ab. Die Stege 520.1, 521.1 sind etwa in der Mitte der Schenkellänge der U-Form angeordnet. Die Stege 520.1, 521.1 dienen dazu, ein Montagewerkzeug wie beispielsweise eine Bohrlehre aufzunehmen. Das Montagewerkzeug wird durch die Stege 520.1, 521.1 in einer rechtwinklig zur Hauptfläche stehenden Achse formschlüssig im Längsträger 500.1 gehalten.

Der Längsträger 500.1 weist auf der der Isolationsschicht zugewandten Seite, also auf der Seite der Hauptfläche zwei über die gesamte Länge des Längsträgers 500.1 verlaufende Raststege 510.1, 511.1 auf, dargestellt in Figur 3c. Diese Ansicht ist eine Vergrösserung des Bereichs mit den Raststege 510.1, 511.1 aus Figur 3b jedoch ohne montierten Nagel 600. Die Raststege 510.1, 511.1 sind in Querrichtung gesehen in einem Abstand zueinander angeordnet und stehen rechtwinklig von einem Boden der U-Form ab. Der Abstand zwischen den Raststegen 510.1, 511.1 in Querrichtung ist etwas kleiner als die Breite der U-Form. Die Höhe der Raststege 510.1, 511.1, also der Abstand vom Boden der U-Form bis zum Ende der Raststege 510.1, 511.1 entspricht in etwa der Höhe der Schenkel 610, 611 des Kopfteils 601. Jeder Raststege 510.1, 511.1 weist eine auf einer Innenseite des Raststeges 510.1, 511.1 angeordnete dem anderen Raststeg 510.1, 511.1 zugewandte Nut 512.1, 513.1 auf. Diese Nuten 512.1, 513.1 verlaufen über die ganze Länge der Raststege 510.1, 511.1. Die Nuten 512.1, 513.1 befinden sich nahe dem Boden der U-Form, das heisst sie sind im Bereich angeordnet, wo die Raststege 510.1, 511.1 mit dem Boden der U-Form verbunden sind. Eine Seitenwand der Nuten 512.1, 513.1 bildet der Boden der U-Form, die gegenüberliegenden Seitenwände sind als nasenförmige kanten 514.1, 515.1 ausgebildet. Die nasenförmigen Kanten 514.1, 515.1 haben auf der vom Längsträger 500.1 weg zeigenden Seite eine rampenförmige Form.

Wird der Nagel 600 mit dem Kopfteil 601 zwischen die Raststege 510.1, 511.1 geführt, biegen die hervorstehenden Kanten 514.1, 515.1 der Nuten 512.1, 513.1 zuerst die Schenkel 610, 611 gegeneinander zu. Wenn das Kopfteil 601 weiter zwischen die Raststege 510.1, 511.1 geschoben wird, rasten die Rasthaken 620, 621 an den Schenkel 610, 611 in die Nuten 512.1, 513.1 ein, ersichtlich in Figur 3b. Das heisst, die Schenkel 610, 611 federn durch die Elastizität des Materials zurück in die Grundstellung und die Rasthaken 620, 621 liegt in den Nuten 512.1, 513.1. Der Nagel 600 befindet sich dann in der befestigten Position. Das bedeutet, der Kopfteil 601 des Nagels 600 ist nun durch Formschluss in den Nuten 512.1, 513.1 des Längsträgers 500.1 gehalten. Bei einer in Längsrichtung des Stiftteils 602 vom Längsträger 500.1 wegzeigenden wirkenden Kraft stehen die Rasthaken 620, 621 an Seitenwänden der Nuten 512.1, 513.1 an und verhindern somit eine Bewegung des Nagels 600 in Kraftrichtung.

In einer anderen nicht gezeigten Ausführung des Längsträgers 500.1 wird der Nagel 600 von der der Hauptfläche gegenüber liegenden Seite des Längsträgers 500.1 montiert. Der Nagel 600 wird in diesem Fall mit der Spitze 650 voran von der Öffnung 540.1 der U-Form durch ein Loch im Längsträger 500.1 geführt bis die Rasthaken 620, 621 des Kopfteils 601 in die Nuten 520.1, 521.1 einrasten. Der Kopfteil 601 des Nagels 600 liegt in diesem Fall auf der der Hauptfläche gegenüber liegenden Seite des Längsträgers 500.1. Dadurch kann der Nagel 600 beispielsweise an einen bereits auf der Isolationsschicht aufliegenden Längsträger 500.1 montiert werden.

In Figur 3d ist der Längsträger 500.1 mit dem montierten Nagel 600 in der Draufsicht gezeigt. Ersichtlich ist zudem die rechteckförmige Kopfplatte 603 des Nagels 600. Im Längsträger 500.1 befinden sich in der Mitte in Bezug auf die Querrichtung im Boden der U-Form grosse Löcher 541.1 und kleine ovale Ausnehmungen 542.1. In Längsrichtung des Längsträgers 500.1 gesehen sind ovale Ausnehmungen 542.1 und grosse Löcher 541.1 immer abwechselnd angeordnet, wobei nach drei Ausnehmungen und zwei Löcher 541.1 immer eine Lücke vorhanden ist.

Durch die grossen Löcher 541.1 erfolgt die Bohrung durch die Isolationsschicht in die Gebäudewand. Die kleinen ovalen Löcher 542.1 dienen dazu, eine Bohrlehre in Längsrichtung formschlüssig zu halten.

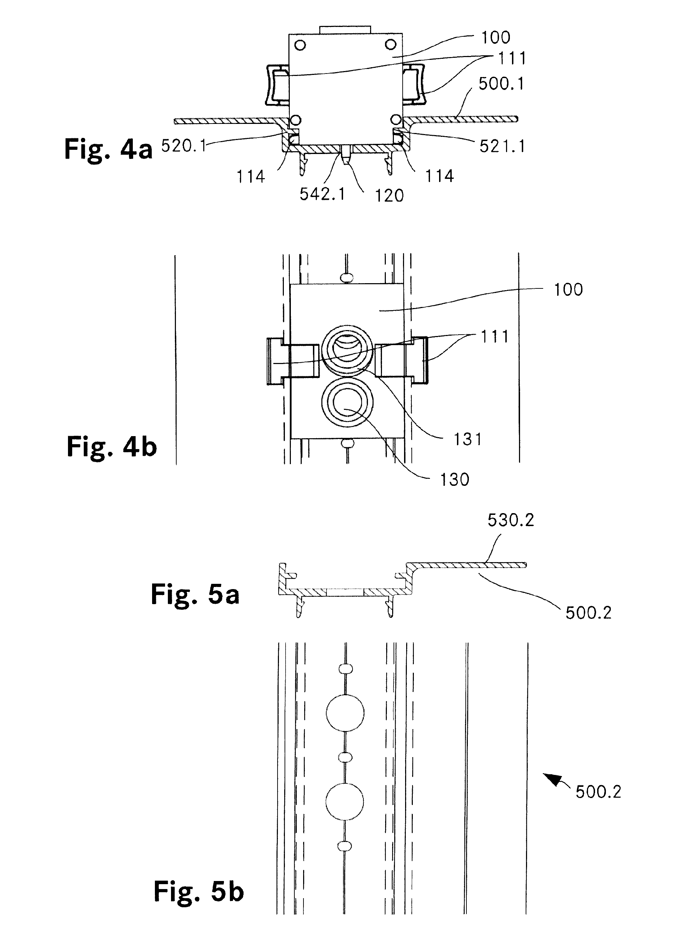

Figur 4a zeigt einen Querschnitt des Längsprofils 500.1 mit einer eingesetzten Bohrlehre 100. Seitliche bewegliche Stifte 114 der Bohrlehre 100 greifen in den Hohlraum, der durch die Stege 520.1, 521.1 gebildet wird. Damit ist die Bohrlehre 100 in Richtung der senkrecht zur Hauptfläche stehenden Achse formschlüssig im Längsprofil 500.1 gehalten. Zusätzlich greift ein Stift 120 der Bohrlehre 100 in die Ausnehmung 542.1. Dadurch ist die Bohrlehre 100 auch in Längsrichtung des Längsträgers 500.1 formschlüssig gehalten. Figur 4b zeigt eine Draufsicht der montierten Bohrlehre 100. Die Bohrlehre 100 umfasst weiter zwei seitlich gegenüberliegende Betätigungselemente 111, womit die Stifte 114 entgegen einer Federkraft in eine Offenstellung überführt werden können. Weiter umfasst die Bohrlehre 100 Durchgänge 130, 131 für das Durchführen eines Bohrers. Die beiden Durchgänge 130, 131 weisen einen Zwischenwinkel von ca. 15° bis 25° auf, wobei einer der Durchgänge 130 zur Hauptfläche senkrecht steht. Damit können Bohrungen in unterschiedlichen Winkeln durchgeführt werden.

Die Figur 5a stellt eine weitere Ausführung des Längsträgers 500.2 dar. Im Unterschied zur in Figur 3d gezeigten Ausführung, hat diese Variante nur auf einer Seite eine an die U-Form anschliessende Ausdehnung 530.2 in Querrichtung. Figur 5b zeigt die Draufsicht des Längsträgers 500.2 aus Figur 5a.

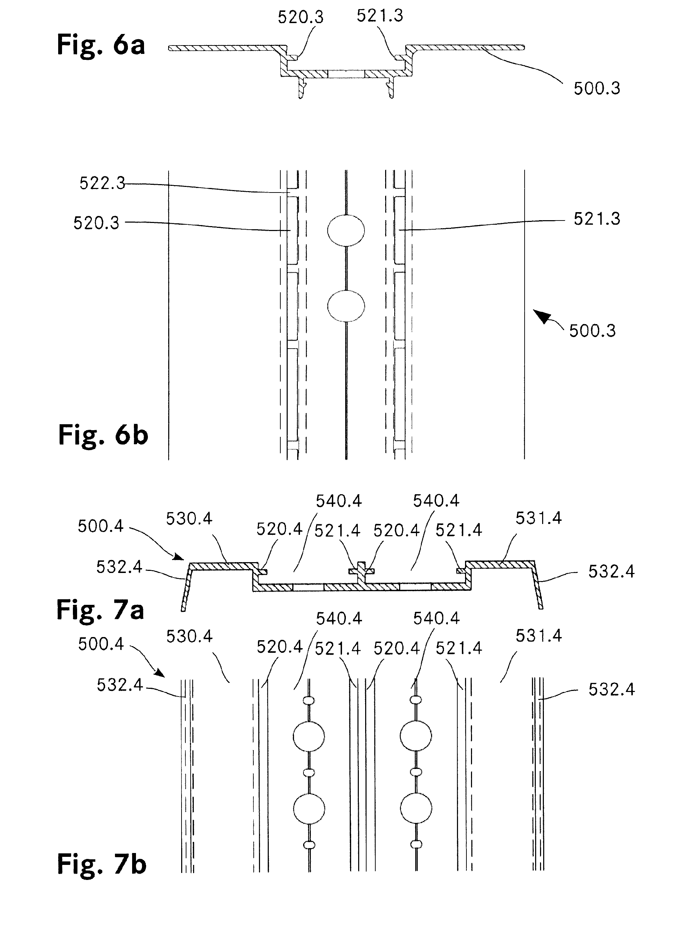

Figur 6a zeigt einen Querschnitt einer weiteren Ausführungsvariante des Längsträgers 500.3. Im Unterschied zur Ausführung aus Figur 3d sind bei dieser Variante die Stege 520.3, 521.3 nicht über die gesamte Länge des Längsträgers 500.3 durchgehend. Das ist ersichtlich in der Draufsicht in Figur 6b. Die Stege 520.3, 521.3 sind in Längsrichtung in Stücke aufgeteilt, so dass sich zwischen den Stücken eine Lücke 522.3 ergibt. Diese Lücke 522.3 dient dazu, die Bohrlehre 100 in Längsrichtung des Längsträgers 500.3 formschlüssig in Position zu halten. Die Bohrlehre 100 weist dazu einen Stift auf der in die Lücke 522.3 ragt. Der Längsträger 500.3 hat in dieser Ausführung im Boden der U-Form keine Aussparungen für einen Stift gemäss Figur 4a - für die vorliegende Ausführungsform weist die Bohrlehre 100 seitlich eine Nase auf, welche in eine solche Lücke 522.3 einfahren und damit die Bohrlehre in einer Längsrichtung des Längsträgers 500.3 fixieren kann.

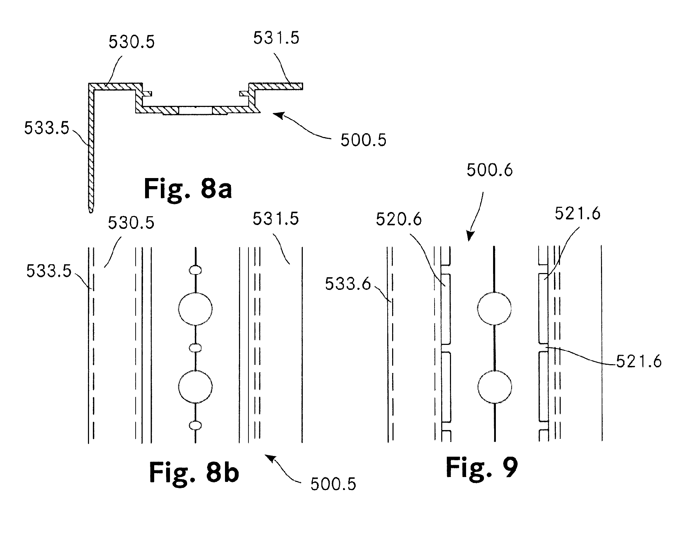

Figur 7a zeigt eine Ausführung des Längsträgers 500.4 mit zwei nebeneinander liegenden U-Formen und damit mit zwei nebeneinander liegenden Öffnungen 540.4. Die beiden U-Formen sind in Querrichtung nebeneinander auf einer Linie angeordnet. Beide U-Formen weisen Stege 520.4, 521.4 auf. Die Position und Ausbildung der Stege 520.4, 521.4 in der U-Form ist identisch mit der Ausführung in Figur 3b. In der Mitte in Querrichtung gesehen teilen sich die beiden U-Formen einen Schenkel. Zudem sind bei dieser Ausführung die seitlichen Ausdehnungen 530.4, 531.4 in Querrichtung abgewinkelt. Das bedeutet, die Ausdehnungen 530.4, 531.4 weisen Abschnitte 532.4 auf, die in einem Winkel von ungefähr 80° zur Hauptfläche des Längsträgers 500.4 stehen. Der gezeigte Längsträger 500.4 hat keine Aufnahmen für das Kopfteil 601 des Nagels 600, da der Längsträger 500.4 mit den abgewinkelten Abschnitten 532.4 beispielsweise auf einer Kante, einem Dachrand oder einem Rahmen positioniert werden kann. Der Nagel 600 kann in dieser Ausführungsform des Längsträgers 500.4 auch mit dem Stiftteil 602 voran durch eine Öffnung 540.4 geführt werden, so dass der Kopfteil 601 des Nagels 600 bei den Stegen 520.4, 521.4 einrastet (dies gilt gleichermassen auch für die Ausführungsform gemäss Figur 7 und 8). In einer nicht abgebildeten Ausführung kann der Längsträger 500.4 jedoch auch eine Aufnahme zur Befestigung des Kopfteils 601 des Nagels 600 auf der den Stegen 520.4, 521.4 gegenüberliegenden Seite aufweisen. Figur 7b zeigt eine Draufsicht des Längsträgers 500.4 aus Figur 7a.

Durch die beiden U-Formen mit den Stegen 520.4, 521.4 kann der Längsträger auf parallelen Bahnen an der Aussenseite einer Isolationsschicht befestigt werden, so dass eine besonders stabile Montage erreicht wird.

Figur 8a zeigt eine Ausführung des Längsträger 500.5, wobei die seitlichen Ausdehnungen 530.5, 531.5 in Querrichtung nur etwa halb so lang sind wie die der in Figur 3b gezeigten Ausführung. Zudem weist eine Ausdehnung 530.5 einen im rechten Winkel zur Hauptfläche stehenden Abschnitt 533.5 auf. Dieser Abschnitt 533.5 ist auf der Seite der Hauptfläche abstehend und verläuft über die gesamte Länge des Längsträgers 500.5.

Der in Figur 9 gezeigte Längsträger 500.6 unterscheidet sich von der Figur 8b lediglich durch die unterbrochenen Stege 520.6, 521.6.

Der abgewinkelte Abschnitt 533.5 oder 533.6 ermöglicht ein einfaches Positionieren des Längsträgers 500.5 oder 500.6 beispielsweise an einer Kante oder einem Dachrand. In einer nicht abgebildeten Variante weist der Längsträger 500.5 respektive 500.6 eine Aufnahme zur Befestigung des Kopfteils 601 des Nagels 600 auf.

Figur 9 zeigt einen Längsträger 500.6, der denselben Querschnitt wie der in Figur 8a gezeigte Längsträger 500.5 aufweist. Jedoch sind beim Längsträger 500.6 die Stege 520.6, 521.6 in Längsrichtung des Längsträgers 500.6 unterbrochen, so dass Lücken 521.6 entstehen um die Bohrlehre 100 formschlüssig in Längsrichtung zu halten.

Zusammenfassend ist festzustellen, dass mit dem erfindungsgemässen System mit den stiftartigen Befestigungsmitteln die Längsträger einfach und an einer beliebigen Stelle an die Aussenseite der Isolationsschicht provisorisch fixiert werden können. Das ermöglicht eine zeitsparende und kostengünstige Montage der Längsträger, da die Arbeitsschritte von einer einzelnen Person und ohne Werkzeug ausgeführt werden können.

## Patentansprüche

1. System umfassend einen Längsträger (500.1) mit einer Hauptfläche und ein stiftartiges Befestigungsmittel (600) zur provisorischen Befestigung des Längsträgers (500.1) an einer Aussenseite einer Isolationsschicht (2), **dadurch gekennzeichnet, dass** das stiftartige Befestigungsmittel (600) einen Kopfteil (601) zur Befestigung des stiftartigen Befestigungsmittels (600) am Längsträger (500.1) und einen Stiftteil (602) zum Einführen in eine Isolationsschicht (2) umfasst.

2. System nach Anspruch 1, **dadurch gekennzeichnet, dass** das stiftartige Befestigungsmittel (600) in der Art eines Nagels ausgebildet ist, der von Hand in die Isolation gesteckt werden kann.

3. System nach Anspruch 2, **dadurch gekennzeichnet, dass** der Nagel (600) einen Kopfteil (601) aufweist, der lösbar am Längsträger (500.1) befestigbar ist.

4. System nach Anspruch 2 oder 3, **dadurch gekennzeichnet, dass** der Nagel (600) in befestigtem Zustand rechtwinklig von der Hauptfläche des Längsträgers (500.1) absteht.

5. System nach Anspruch 3 oder 4, **dadurch gekennzeichnet, dass** der Kopfteil (6.01) des Nagels (600) über eine Rastverbindung am Längsträger (500.1) befestigbar ist.

6. System nach Anspruch 5, **dadurch gekennzeichnet, dass** der Kopfteil (601) an einer dem Stiftteil (602) gegenüberliegenden Seite Rasthaken (620, 621) und der Längsträger (500.1) Nuten (512, 513) aufweist, wobei in befestigtem Zustand des Nagels (600) am Längsträger (500.1) die Rasthaken (620, 621) in die Nuten (512, 513) eingreifen.

7. System nach Anspruch 6, **dadurch gekennzeichnet, dass** die Rasthaken (620, 621) zwei Schenkel (610, 611) umfassen, womit der Kopfteil (601) im Querschnitt eine U-Form bildet.

8. System nach Anspruch 7, **dadurch gekennzeichnet, dass** die beiden Schenkel (610, 611) quer zu einer Stiftteillängsrichtung federnd ausgebildet sind.

9. Nagel (600), insbesondere zur Verwendung in einem System nach einem der Ansprüche 1 bis 8, zur provisorischen Befestigung eines Längsträgers (500.1) an einer Aussenseite einer Isolationsschicht (2) umfassend einen Stiftteil (602) und einen Kopfteil (601), **dadurch gekennzeichnet, dass** der längliche leistenförmige Kopfteil (601) Rasthaken (620, 621) zur Befestigung des Nagels (600) an einem Längsträger (500.1) umfasst.

10. Nagel (600) nach Anspruch 9, **dadurch gekennzeichnet, dass** die Rasthaken (620, 621) im Randbereich des Kopfteils (601) angeordnet sind.

11. Nagel (600) nach Anspruch 9 oder 10, **dadurch gekennzeichnet, dass** der Rasthaken (620, 621) federnd ausgebildet ist.

12. Nagel (600) nach Anspruch 10 oder 11, **dadurch gekennzeichnet, dass** der Kopfteil (601) zwei Rasthaken (620, 621) aufweist, die zwei Schenkel (610, 611) umfassen, welche zusammen mit dem Köpfteil (601) im Querschnitt eine U-Form bilden.

13. Nagel (600) nach einem der Ansprüche 9 bis 12, **dadurch gekennzeichnet, dass** er eine in eine Längsrichtung des Stiftteils (602) verlaufende Schneidkanten (640 - 643) aufweist.

14. Nagel (600) nach einem der Ansprüche 9 bis 13, **dadurch gekennzeichnet, dass** er aus Kunststoff ausgebildet ist.

15. Verfahren zur Vormontage eines Längsträgers (500.1) an einer Fläche, insbesondere an einer Aussenseite einer Isolationsschicht (2) unter Verwendung eines stiftartigen Befestigungsmittels (600) mit einen Kopfteil (601) zur Befestigung des stiftartigen Befestigungsmittels (600) am Längsträger (500.1) und eines Stiftteils (602) zum Einführen in eine Isolationsschicht (2), wobei der Kopfteil des stiftartigen Befestigungsmittels (600) am Längsträger (500.1) befestigt wird und der Stiftteil (602) in die Fläche (2) eingesteckt wird.
